# EUROPEAN PATENT APPLICATION

(11) **EP 0 885 580 A1**
(43) Date of publication of application: **23.12.1998**
(21) Application number: 97118914.7
(22) Date of filing: 30.10.1997
(51) Int. Cl.: A47J 31/40

(54) **Device for preparing and dispensing beverages for automatic and semiautomatic vending machines**

(30) Priority: 17.06.1997 IT MO970027 U
(71) Applicant: Premark International Holdings B.V., 3447 Woerden (NL)
(72) Inventor: Bodo, Mauro, 42100 Reggio Emilia (IT)
(74) Representative: De Nova, Roberto

(57) **Abstract**

A device for preparing and dispensing beverages for automatic and semiautomatic vending machines comprises a tray means (3) which is arranged below an outlet (4) of a tank (5) of dilutable substances and into which at least one outlet (6) leads for delivering a jet of diluent liquid for spontaneous and vortical mixing with a dose of dilutable substance; the tray means (3) has a lower delivery outlet (8) at a region (9) where a cup-like container is placed in the machine.

## Description

The present invention relates to a device for preparing and dispensing beverages for automatic and semiautomatic vending machines.

Machines essentially composed of a frame which contains a refrigeration (or heating) unit which is connected to a water supply coil and to a tank for containing concentrates in various flavors, powders or other kinds of dilutable essence have been used for a long time for vending beverages to the public.

When dispensing is requested, usually by means of a conventional command, a preset volumetric dose of concentrate is drawn from the tank, mixed with a preset amount of water and finally delivered for consumption through a corresponding outlet below which a cup is placed.

Conventional machines currently use, during mixing, a mechanical agitator of various shapes which is actuated by means of an adapted motor or by an equivalent electromechanical means, and amalgamates the diluent liquid, usually water, with the concentrate just before dispensing the beverage ready for consumption.

These conventional machines can be improved in relation to the speed with which the beverage is prepared and to the cost of the dispensing machine.

The motor, or the equivalent electromechanical device, has a cost of its own, which is significant in relation to the overall cost of a dispensing machine and contributes to make it more onerous to purchase and to maintain.

The technical aim of the present invention is to solve the above problems of the conventional machines by providing an improved device for preparing and dispensing beverages for automatic and semiautomatic vending machines which allows to prepare said beverages in real time and without the intervention of motorized mixing devices.

This aim and other objects which will become apparent hereinafter are achieved by an improved device for preparing and dispensing beverages for automatic and semiautomatic vending machines, characterized in that it comprises a tray means which is arranged below the outlet of a tank of dilutable substances and into which at least one outlet leads for delivering a jet of diluent liquid for spontaneous and vortical mixing with a dose of said dilutable substances, said tray means having a lower delivery outlet at the region where a cup-like container is placed in the machine.

Further characteristics and advantages will become apparent from the description of a preferred embodiment of an improved device for preparing and dispensing beverages for automatic and semiautomatic vending machines, illustrated only by way of non-limitative example in the accompanying drawings, wherein:

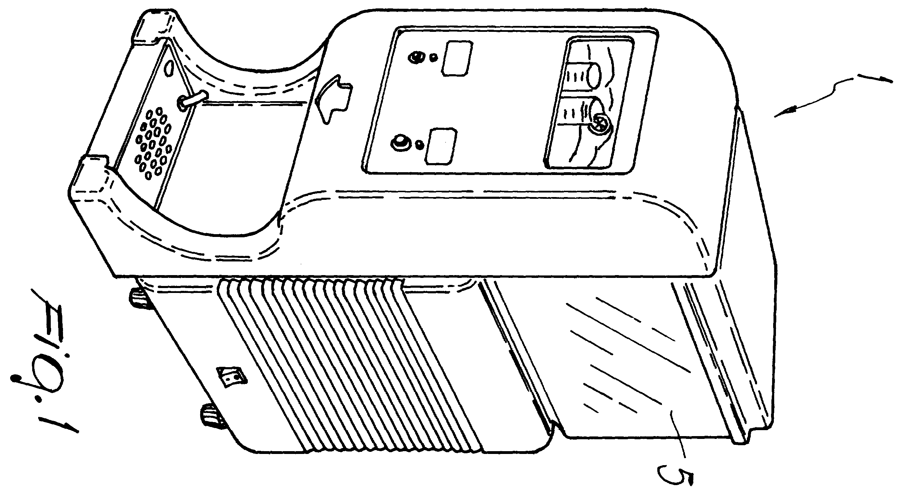

figure 1 is a perspective view of a beverage vending machine;

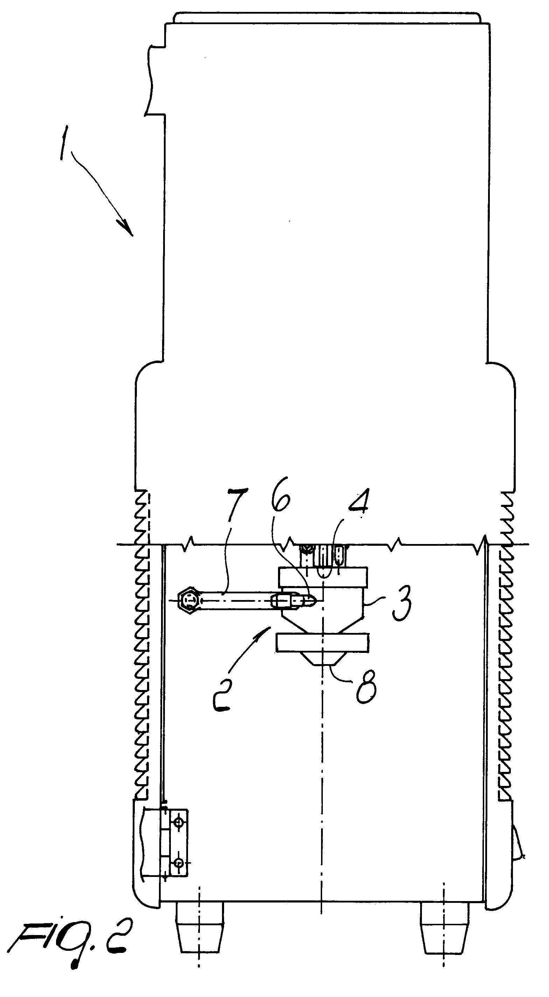

figure 2 is a partially sectional front view of the device according to the invention;

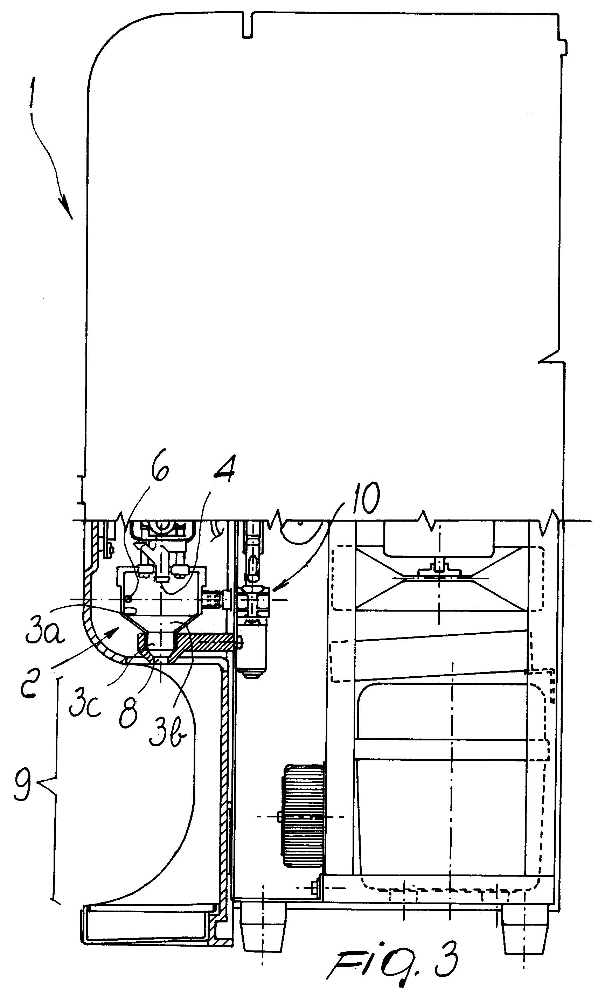

figure 3 is the corresponding side view of figure 2.

With particular reference to the above figures, the reference numeral 1 designates a beverage vending machine equipped with the dispensing device 2 according to the present invention.

The device comprises a tray means 3 which is arranged below an outlet 4 of a conventional tank 5 adapted to contain dilutable substances, specifically high-density concentrates.

At least one outlet 6 for delivering a jet of a diluent liquid, usually water, which arrives from a conventional duct 7, leads into the tray means 3 so as to be arranged tangentially.

The tray means 3 in turn has a lower dispensing outlet 8 which is located exactly at a region 9 where a conventional cup-like container is placed in the machine.

The tray means 3 has a container body which is usually associated with the frame of the vending machine 1 and forms an upper cylindrical portion 3a which blends in a downwards region with a frustum-shaped portion 3b whose taper is directed downwards and leads into a second end portion 3c which is again cylindrical and has a small diameter.

The outlet 6 for dispensing jets of water advantageously leads into the wall of the upper cylindrical portion 3a, conveniently in a tangential direction inside it.

The operation of the present invention is as follows: a dose of high-density concentrate is introduced in the tray means 3 through the outlet 4.

Simultaneously, a conventional valve 10 opens the water supply duct 7 and accordingly a jet of water is sprayed into the tray means 3.

The particular arrangement of the portion 3a on the wall generates a dynamic vortex of the water that strikes the dose of concentrate, entrains it and automatically and completely mixes with it, practically simultaneously with its release into the tray means 3, which advantageously has cylindrical cross-sections whose radius gradually decreases downwards in order to facilitate the generation of the vortex and keep it directed at the center.

The resulting beverage is then dispensed through the outlet 8; all this occurs in real time and without pauses from when the initial dispensing command is given.

It is thus evident that the described invention achieves the intended aim.

The present invention thus conceived is susceptible of modifications and variations, all of which are within the scope of the inventive concept.

All the details may furthermore be replaced with other technically equivalent elements.

In the practical embodiment of the present invention, the materials used, as well as the shapes and the dimensions, may be any according to the requirements without thereby abandoning the scope of the protection of the claims that follow.

Where technical features mentioned in any claim are followed by reference signs, those reference signs, have been included for the sole purpose of increasing the intelligibility of the claims and accordingly, such reference signs do not have any limiting effect on the interpretation of each element identified by way of example by such reference signs.

## Claims

1. A device for preparing and dispensing beverages for automatic and semiautomatic vending machines, characterized in that it comprises a tray means which is arranged below an outlet of a tank of dilutable substances and into which at least one outlet leads for delivering a jet of diluent liquid for spontaneous and vortical mixing with a dose of said dilutable substances, said tray means having a lower delivery outlet at a region where a cup-like container is placed in the machine.

2. A device according to claim 1, characterized in that said tray means has a container body which is associated with the frame of said vending machine and forms an upper cylindrical portion which blends, in a downwards region, with a frustum-shaped portion whose taper is directed downwards and leads into a second end portion which is cylindrical and has a smaller diameter.

3. A device according to claim 2, characterized in that said diluent liquid delivery outlet leads into the inside wall of said upper cylindrical portion.

4. A device according to claim 2, characterized in that at least one outlet leads tangentially into the inside wall of said upper cylindrical portion.
